# EUROPEAN PATENT APPLICATION

(11) **EP 2 840 259 A1**
(43) Date of publication of application: **25.02.2015**
(21) Application number: 13382337.7
(22) Date of filing: 23.08.2013
(51) Int. Cl.: F03D 11/04, E04H 12/00, F03D 1/00

(54) **Tower portion**

(71) Applicant: Alstom Renovables España, S.L., 08005 Barcelona (ES)
(72) Inventor: Gonzales Del Egido, Alberto, 08018 BARCELONA (ES); Herencia Mora, Rubén, 08206 SABADELL (ES); Argudo Yuste, Ivan, 08921 SANTA COLOMA DE GRAMENET (ES)
(74) Representative: ZBM Patents - Zea, Barlocci & Markvardsen

(57) **Abstract**

The present invention provides a tower portion for a wind turbine comprising at least one wall segment and at least one opening segment. The opening segment comprises an opening, one or more inner edges, two side edges, an upper edge and a lower edge, the opening being delimited by the one or more inner edges. The wall segment is shaped as less than a full 360° ring. The opening segment is coupled with the wall segment by the side edges. The opening segment and the wall segment form segments of a ring and when coupled form a full 360° ring. The opening segment has a variable thickness increasing from the side edges to the inner edges.

## Description

The present invention relates to a tower portion for a wind turbine comprising at least one wall segment and at least one opening segment.

### BACKGROUND ART

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. Said rotation generates a torque that is normally transmitted through a rotor shaft to a generator, either directly or through the use of a gearbox. This way, the generator produces electricity which can be supplied to the electrical grid.

A wind turbine tower typically has a one or more apertures. An aperture may be e.g. a door giving access to the inside of the tower where different types of e.g. electronic equipment may be provided. Also, an inner stair may provide access to different levels, from the ground to the top (e.g. the nacelle), of the wind turbine. Other types of holes on the tower wall may be aimed at providing passage of any kind of tubes or pipes, such as e.g. tubes of an air conditioning system, tubes for protecting electric cables, etc.

A tower may also comprise what is herein called maintenance holes. This type of holes is mainly aimed at providing maintenance operator(s) with access, from the inside of the tower, to devices/components arranged on an outer surface of the tower, such as e.g. beacons, sensors, etc. This kind of maintenance holes may enable a maintenance operator to access these "external" devices or components by e.g. passing his/her arms through the hole from an inner position of the tower.

It is known that a tower may be constituted by a plurality of tower parts with annular shape (i.e. "tower rings") which are mounted on top of each other. A tower part may be formed by one or more tower segments ("part rings") coupled (welded) together at corresponding edges. A plurality (e.g. three, four or five or more) contiguous stacked tower parts may be welded together and/or joined through flanges (or the like) to form an entire tower. A tower segment may be either a wall segment or an opening segment. An opening segment comprises at least one aperture of any of the types commented before, whereas a tower segment does not have any apertures.

EP1856410B1 provides for a tower part wherein an aperture (or opening) segment is of a substantially uniform thickness and is thicker than the thickness of wall segments. By making the aperture segment of a substantially uniform thickness, it can be made out of an ordinary steel plate. In the quality normally used to make tower parts, steel plates are relatively inexpensive in purchase and relatively easy to machine, roll and weld.

The present invention aims at improving the prior art tower parts based on wall and opening segments.

### SUMMARY OF THE INVENTION

The present invention provides a tower portion for a wind turbine comprising at least one wall segment and at least one opening segment. The opening segment comprises an opening delimited by one or more inner edges. The opening segment further comprises two side edges, an upper edge and a lower edge. The wall segment is shaped as less than a full 360° ring. The opening segment is coupled with the wall segment by the side edges. The opening segment and the wall segment form segments of a ring and when coupled form a full 360° ring. The opening segment has a variable thickness increasing from the side edges to the inner edges.

One key point of this proposed tower portion (or tower part) configuration is that the opening segment has a variable thickness, which differs from the known prior art. This variable thickness of the opening segment, which increases from its side edges to its inner edges, may result in an opening segment that is relatively light while a strong enough reinforcement may be ensured where really needed.

On the one hand, less material may be present near the side ("coupling") edges of the opening segment which are to be attached to corresponding ("coupling") edges of a wall segment. This reduction of material may cause the opening segment to be lighter. Also, the thickness of the opening segment at its "coupling" edges may be substantially equal to the thickness of the wall segment at its "coupling" edges. This way, "coupling" edges may be more easily welded together, such that smoother junctions between the opening and the wall segment may be obtained, without necessity of e.g. sharpening the "coupling" edges of the opening segment.

On the other hand, more material may be provided near the inner edges (substantially around the opening or aperture), which causes the opening segment to be reinforced where really needed.

Such a reduction in weight of the opening segment in comparison with prior art opening segments may permit an easier transport and/or handling of the segment. This may thus facilitate the manufacture and/or coupling of the opening segment to corresponding wall segment(s) and render them cheaper. For example, less force/power (by e.g. a handling apparatus) may be required to handle the segment during its manufacture and/or coupling to other tower segment(s), a larger number of opening segments can be transported at the same time (when e.g. the overall weight is a constraint), etc.

In some embodiments, the variable thickness of the opening segment may also increase from the upper and lower edges to the inner edges. This way, the amount of material forming the opening segment may even be smaller (near the upper and lower edges) while still maintaining a sufficiently strong reinforcement around the opening (near the inner edges) of the opening segment. Alternatively, the upper and lower edges may be simply sharpened, such that the thickness of the opening segment may not globally vary from the upper and lower edges to the inner edges.

In some embodiments, the increased thickness of the opening segment may be provided only internally to the tower portion. Alternatively, the increased thickness of the opening segment may be provided only externally to the tower portion. In other alternative configurations, the increased thickness of the opening segment may be provided both internally and externally to the tower portion.

An aspect of providing the increased thickness of the opening segment only internally to the tower portion may be that roll bending metal plates to form the opening segments may be facilitated.

In some of the embodiments with the increased thickness of the opening segment provided both internally and externally to the tower portion, the increased thickness may be provided substantially symmetrically. This substantially symmetric distribution of the increased thickness (and thus of the corresponding material) results in a segment wherein the neutral line of this segment coincides with the neutral line of tower segments above and below the segment with the aperture. Bending loads may thus be reduced.

In embodiments of the tower portion, the variable thickness may increase substantially linearly from the side edges and/or the upper and lower edges to the inner edges. In some of these configurations, the variable thickness may increase linearly from a smaller thickness to a greater thickness, in such a way that the smaller thickness may be between 30% and 80%, preferably 40% and 70%, and most preferably 48% and 63% of the greater thickness. An aspect of this substantially linearly variable thickness may be that the opening segment may be easier to manufacture in comparison with other more complex geometries or shapes. For example, this linearly variable thickness may be obtained by performing a rather easy machining process due to the linearity of the thickness to be achieved.

Alternatively, the opening segment may comprise a region of substantially uniform thickness surrounding the opening, and the thickness may increase from the side edges and/or the upper and lower edges to said region surrounding the opening. This increase of the thickness, which may optionally be substantially linear, may range from a smaller thickness to a greater thickness. This smaller thickness may lie between 30% and 80%, preferably 40% and 70%, and most preferably 48% and 63%, of the greater thickness.

Further alternatively, the opening segment may comprise a first region surrounding the opening, and a second region delimited at least in part by the side edges and/or the upper and lower edges. Both the first and second regions may be of uniform thickness and may be seen as delimiting a transition region between them. The thickness (of the transition region) may increase from the second region to the first region. This increase of the thickness (of the transition region), which may optionally be substantially linear, may range from a smaller thickness to a greater thickness. This smaller thickness may lie between 30% and 80%, preferably 40% and 70%, and most preferably 48% and 63%, of the greater thickness.

Each of the above mentioned (optional) ranges of the ratio between corresponding smaller and greater thicknesses have been determined by the inventors to be suitable enough by performing simulations (e.g. FEM simulations). However, these ranges could have also been calculated experimentally under controlled conditions (e.g. on prototypes under expressly generated loads).

An aspect of the above configurations based on a region of uniform thickness surrounding the opening, may be that the segment may be more effectively reinforced. This region surrounding the opening may have a (uniform) thickness sufficient to ensure a strong reinforcement where really needed (around the opening). This reinforcement may be stronger because the variable thickness does not (immediately) decrease from the edge(s) delimiting the opening, but this (greater) thickness is maintained to some extent.

According to embodiments of the tower portion, the opening segment may comprise no further reinforcements (ribs or other protrusions). An aspect of this lack of further reinforcements may be that the opening segment (and the overall tower portion) may be simpler than others having further reinforcements. In turn, however, the (only) existing reinforcement based on the variable thickness as described before (according to embodiments of the tower portion) may suffice to be effective enough where really needed (near/around the inner edges delimiting the opening of the opening segment).

For example, any further (reinforcing) rib is normally attached to the opening segment by welding or another (possibly "aggressive") technique, which may weaken the segment and may make it more sensitive to fatigue.

In some embodiments, the opening of the opening segment may be a door, or a maintenance hole as defined in the background section.

### BRIEF DESCRIPTION OF THE DRAWINGS

Particular embodiments of the present invention will be described in the following by way of non-limiting examples, with reference to the appended drawings, in which:
Figure 1 is a schematic representation of a tower portion according to a first embodiment;
Figures 2a and 2b are schematic representations of respective tower portions according to a second and third embodiment;
Figure 3 is a schematic representation of respective opening segments according to a fourth and fifth embodiments of the tower portion; and
Figure 4 is a schematic representation of respective opening segments according to a sixth and seventh embodiments of the tower portion.

### DETAILED DESCRIPTION OF EMBODIMENTS OF THE INVENTION

In the following description, numerous specific details are set forth in order to provide a thorough understanding of examples of the present invention. It will be understood by one skilled in the art however, that examples of the present invention may be practiced without some or all of these specific details. In other instances, well known elements have not been described in detail in order not to unnecessarily obscure the description of the present invention.

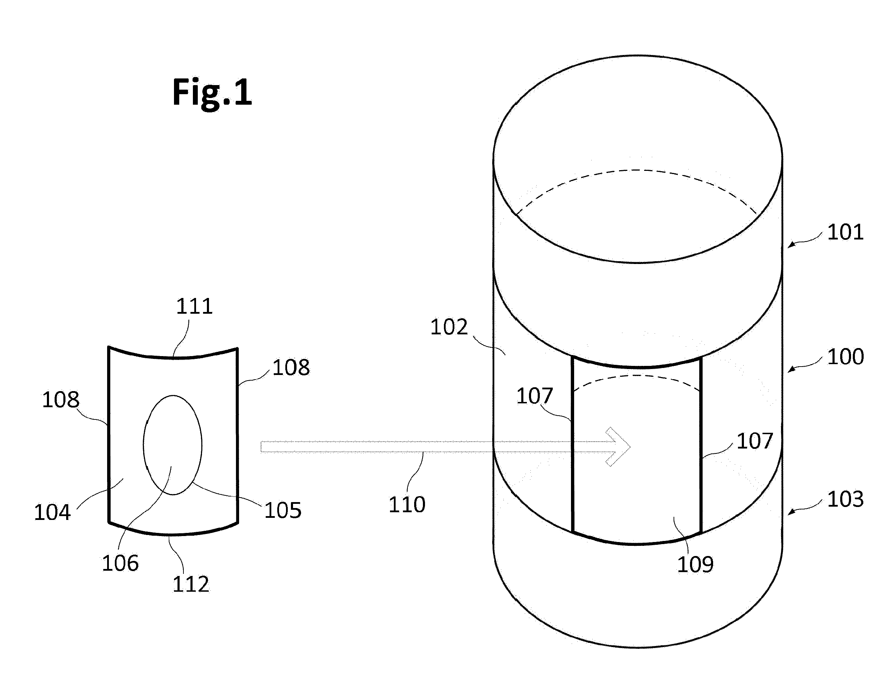

Figure 1 is a schematic representation of a tower portion 100 according to a first embodiment. This tower portion 100 (for a wind turbine) comprises a wall segment 102 and an opening segment 104, which are shown separated or uncoupled. The opening segment 104 comprises an opening 106, an inner edge 105, two side edges 108, an upper edge 111 and a lower edge 112. The opening 106 is delimited by the inner edge 105. The wall segment 102 is shaped as part of a ring, i.e. less than a full 360° ring.

The opening segment 104 is to be coupled 110 with the wall segment 102 by the side edges 108 of the opening segment 104 and corresponding edges 107 of the wall segment 102. The opening segment 104 and the wall segment 102 form segments of a ring when separated (as shown in Figure 1), but they form a full 360° ring when coupled. The height of the opening segment 104 is substantially the same as the height of the wall segment 102.

The opening segment 104 has a variable thickness increasing at least from the side edges 108 to the inner edge 105. Optionally, the variable thickness of the opening segment 104 may also increase from the upper edge 111 and lower edge 112 to the inner edge 105. This variable thickness is not reflected however by Figure 1. Details of how the thickness of the opening segment 104 may vary will be provided in other descriptions with reference to other figures.

Two further tower portions 101, 103, which do not comprise any opening segment, are also shown. Instead, each of these further tower portions 101, 103 comprises only a wall segment forming a full 360° ring. The tower portion 101 is shown mounted on top of the tower portion 100 (which is configured to receive the opening segment 104), and the tower portion 100 is shown mounted on top of the other tower portion 103. The entire configuration made up by the three tower portions 100, 101 and 103 is shown having an space 109 which is to be covered by the opening segment 104 when coupled 110 with the wall segment 102.

The upper tower portion 101 and the intermediate tower portion 100 (once its components 102 and 104 have been suitably coupled 110) may be bonded or coupled together (along the 360°) by welding a top edge of the intermediate tower portion 100 and a bottom edge of the upper tower portion 101. Note that this attachment includes the opening segment 104 attached to a portion of the bottom edge of the upper tower portion 101 by the upper edge 111 of the opening segment 104.

Similarly, the lower tower portion 103 may be welded to the intermediate tower portion 100.

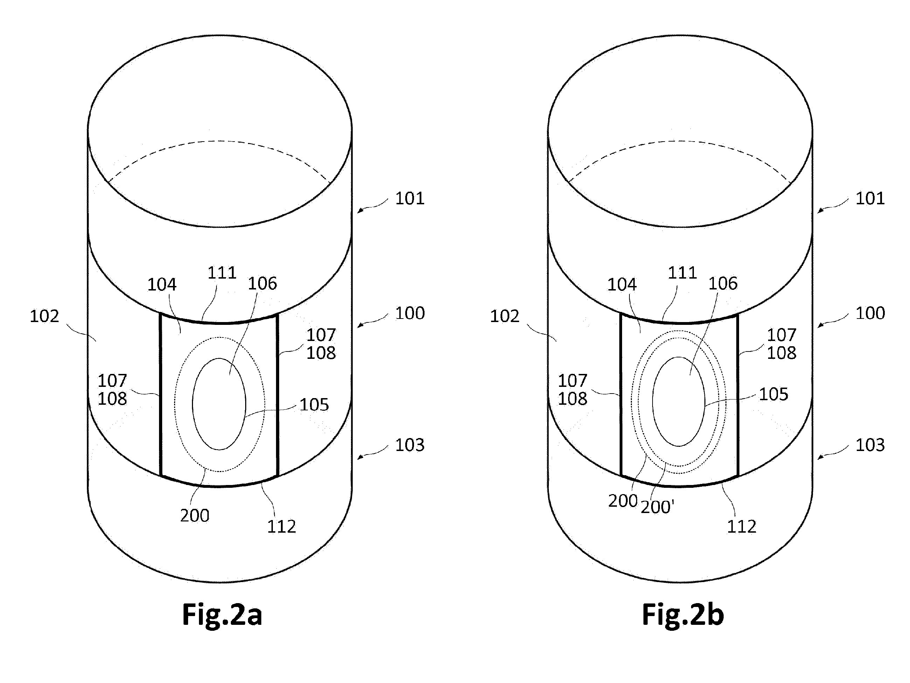

Figures 2a and 2b are schematic representations of respective tower portions 100 according to a second and third embodiment. Number references of Figure 1 have been kept in Figures 2a and 2b to indicate the same or similar elements. One difference between Figure 1 and Figures 2a - 2b is that the wall segment 102 and the opening segment 104 are shown coupled together in Figures 2a - 2b. Another difference is that Figure 2a shows one dashed line 200, and Figure 2b shows two dashed lines 200, 200', both indicating a change of thickness of the opening segment 104.

With respect to Figure 2a, the thickness of the opening segment 104 may e.g. linearly increase from the side, upper and lower edges 108, 111, 122 of the opening segment 104 to the dashed line 200. The opening segment 104 may e.g. have a substantially uniform (major) thickness between the dashed line 200 and the inner edge 105 delimiting the opening 106.

In relation to Figure 2b, the thickness of the opening segment 104 may be substantially uniform from the side, upper and lower edges 108, 111, 122 (of the opening segment 104) to the outer dashed line 200. The opening segment 104 may have a substantially uniform thickness between the inner dashed line 200' and the inner edge 105 (delimiting the opening 106). And the thickness of the opening segment 104 may (substantially linearly) increase from the outer dashed line 200 to the inner dashed line 200'.

In other words, a first region of uniform major thickness, a second region of uniform minor thickness, and a transition region of variable thickness connecting the first and second regions, may be distinguished in Figure 2b. The first region appears delimited by the side, upper and lower edges 108, 111, 122, and the outer dashed line 200. The second region appears delimited by the inner dashed line 200' and the inner edge 105. The transition region appears delimited by the inner dashed line 200' and the outer dashed line 200, and its variable thickness may increase (optionally linearly) from the minor thickness of the second region to the major thickness of the first region.

In the embodiments depicted by Figures 2a and 2b, the thickness near the side, upper and lower edges 108, 111, 122 may be sufficient to ensure a strong enough (welded) attachment of the opening segment 104 to the wall segments 100, 101, 103. The uniform thickness surrounding the opening 106 may be sufficient to ensure a strong enough reinforcement where really needed (around the opening 106).

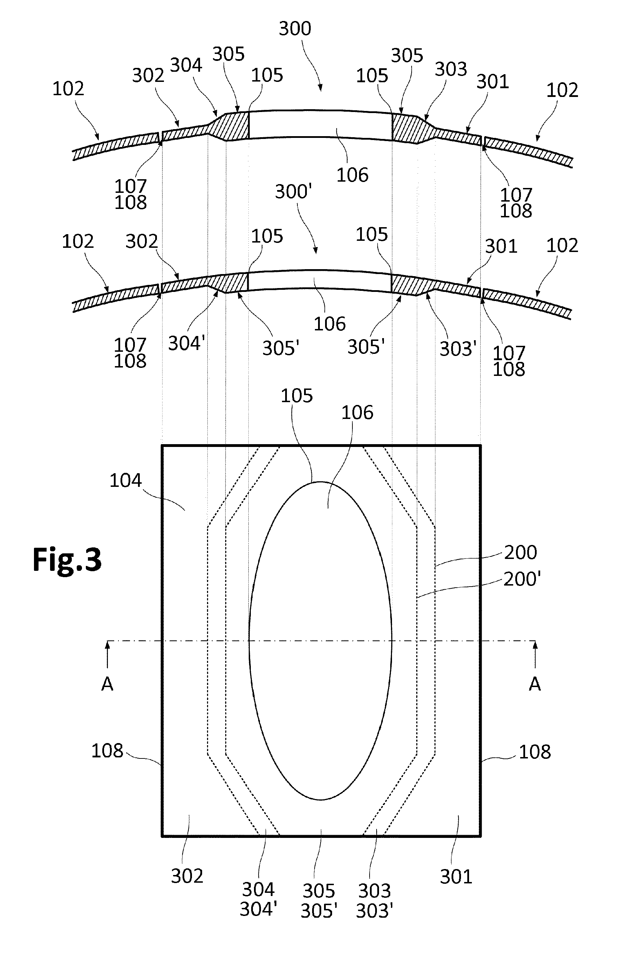

Figure 3 is a schematic representation of respective opening segments according to a fourth and fifth embodiments of the tower portion. This figure shows a common frontal view for both opening segments, whereas different cross sectional views 300, 300' along the line AA (of the frontal view) are shown. The opening segments of Figure 3 thus differ from each other on how their thickness varies from the side edges 108 to the inner edge 105. Number references of Figures 1 and 2a - 2b have been kept in Figure 3 to indicate the same or similar elements.

The common frontal view of the two opening segments is shown with dashed lines 200, 200' indicating respective changes of behaviour of the variable thickness of the opening segment 104.

Each of these opening segments (with different cross sections 300, 300') has a first region 301 with a smaller thickness which is substantially uniform, a second region 305, 305' with a greater thickness which is substantially uniform, and a transition region 303, 303' with variable thickness connecting the first region 301 and the second region 305, 305'. Each opening segment has another first region 302 with a smaller thickness which is substantially uniform and a transition region 304, 304' with variable thickness connecting this other first region 302 and the second region 305, 305'.

The variable thickness of each transition region 303, 303' and 304, 304' is shown varying linearly from the smaller thickness of the corresponding first region 301, 302 to the greater thickness of the corresponding second region 305, 305'.

The cross section 300' is shown with its increased thickness 305' affecting only the inside of the tower portion 100 (once mounted). The cross section 300 is shown with its increased thickness 305 affecting, in a substantially symmetric manner, both the inside and outside of the tower portion 100 (once mounted).

Still referring to Figure 3, particularly in a more central area or region, the upper and lower edges of the opening segment 104 may be simply sharpened, such that the thickness of the opening segment 104 may not globally vary from the upper and lower edges to the inner edges.

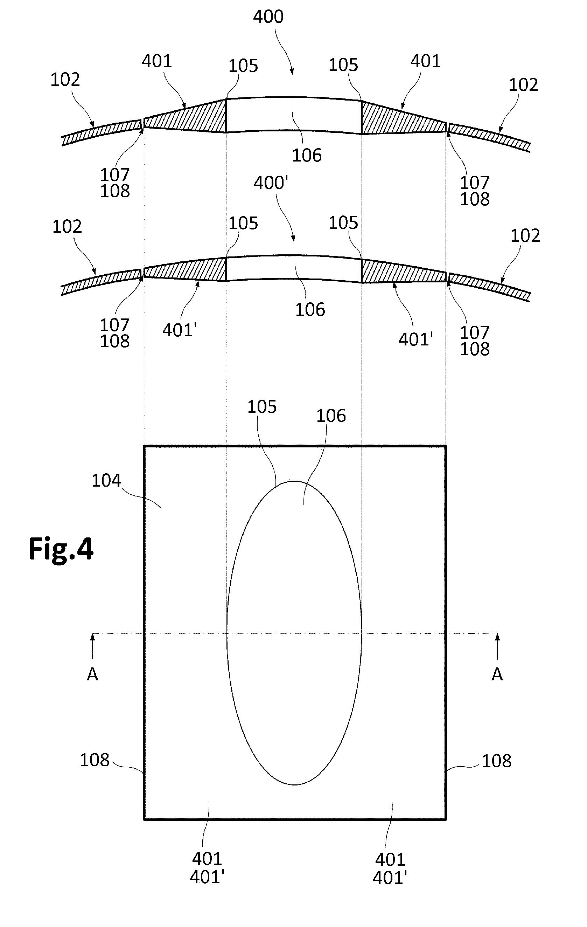

Figure 4 is a schematic representation of respective opening segments according to a sixth and seventh embodiments of the tower portion. This figure shows a common frontal view for both opening segments, whereas different cross sectional views 400, 400' along the line AA (of the frontal view) are shown. The opening segments of Figure 4 thus differ from each other on how their thickness varies from the side edges 108 to the inner edge 105. Number references of Figures 1, 2a - 2b, and 3 have been kept in Figure 4 to indicate the same or similar elements.

Each of these opening segments (with different cross sections 400, 400') is shown having a linear variation of its thickness 401, 401'. The cross section 400' is shown with its increased thickness affecting only the inside of the tower portion 100 (once mounted); i.e. the increased thickness is provided only internally to the tower portion 100 (when mounted). The cross section 400 is shown with its increased thickness distributed, in a substantially symmetric manner, on the inside and outside of the tower.

In some embodiments, the opening segment 104 may not comprise any further reinforcement, such that the opening segment 104 may respond to a simpler design and its manufacture may thus be easier and cheaper.

In any of the described embodiments, the opening 106 of the opening segment 104 may be any type of tower opening, such as e.g. a door, or a maintenance hole (as defined in the background section), or an opening aimed at permitting passage of tubes or pipes, etc.

Although only a number of particular embodiments and examples of the invention have been disclosed herein, it will be understood by those skilled in the art that other alternative embodiments and/or uses of the invention and obvious modifications and equivalents thereof are possible. Furthermore, the present invention covers all possible combinations of the particular embodiments described. Thus, the scope of the present invention should not be limited by particular embodiments, but should be determined only by a fair reading of the claims that follow.

## Claims

1. A tower portion for a wind turbine comprising at least one wall segment and at least one opening segment;
wherein the opening segment comprises an opening delimited by one or more inner edges, two side edges, an upper edge and a lower edge;
wherein the wall segment is shaped as less than a full 360° ring; wherein the opening segment is coupled with the wall segment by the side edges;
wherein the opening segment and the wall segment form segments of a ring and when coupled form a full 360° ring;
wherein the opening segment has a variable thickness increasing from the side edges to the inner edges.

2. The tower portion according to claim 1, wherein the variable thickness of the opening segment also increases from the upper and lower edges to the inner edges.

3. The tower portion according to any of claims 1 or 2, wherein the increased thickness of the opening segment is provided only internally to the tower portion.

4. The tower portion according to any of claims 1 or 2, wherein the increased thickness of the opening segment is provided only externally to the tower portion.

5. The tower portion according to any of claims 1 or 2, wherein the increased thickness of the opening segment is provided internally and externally to the tower portion.

6. The tower portion according to claim 5, wherein the increased thickness of the opening segment is provided internally and externally to the tower portion in a substantially symmetric manner.

7. The tower portion according to any of claims 1 to 6, wherein the variable thickness increases substantially linearly from the side edges and/or the upper and lower edges to the inner edges.

8. The tower portion according to claim 7, wherein the variable thickness increases substantially linearly from a smaller thickness to a greater thickness, the smaller thickness lying between 30% and 80%, preferably 40% and 70%, and most preferably 48% and 63% of the greater thickness.

9. The tower portion according to any of claims 1 to 6, wherein the opening segment comprises a region of substantially uniform thickness surrounding the opening, and wherein the thickness increases from the side edges and/or the upper and lower edges to said region surrounding the opening.

10. The tower portion according to any of claims 1 to 6, wherein the opening segment comprises a first region of uniform thickness surrounding the opening, and a second region of uniform thickness delimited at least in part by the side edges and/or the upper and lower edges; wherein the thickness increases from the second region to the first region.

11. The tower portion according to any of claims 9 or 10, wherein the thickness increases substantially linearly.

12. The tower portion according to any of claims 9 to 11, wherein the thickness increases from a smaller thickness to a greater thickness, the smaller thickness lying between 30% and 80%, preferably 40% and 70%, and most preferably 48% and 63%, of the greater thickness.

13. The tower portion according to any of claims 1 to 12, wherein the opening segment comprises no further reinforcements.

14. The tower portion according to any of claims 1 to 13, wherein the opening of the opening segment is a door.

15. The tower portion according to any of claims 1 to 13, wherein the opening of the opening segment is a maintenance hole.
